Europäisches Patentamt

European Patent Office

Office européen des brevets

(19)

(11) Veröffentlichungsnummer: **0 311 639**
**B1**

(12) **EUROPÄISCHE PATENTSCHRIFT**

(45) Veröffentlichungstag der Patentschrift: **03.10.90**

(21) Anmeldenummer: **87904386.7**

(22) Anmeldetag: **20.06.87**

(86) Internationale Anmeldenummer:
**PCT/EP87/00321**

(87) Internationale Veröffentlichungsnummer:
**WO 88/00113 14.01.88 Gazette 88/02**

(51) Int. Cl.⁵: **B 27 B 5/22,** B 27 B 31/06,
B 23 D 47/02

(54) **KAPPSÄGE ZUM ABLÄNGEN VON BRETTERN.**

(30) Priorität: **26.06.86 DE 3621357**

(43) Veröffentlichungstag der Anmeldung:
**19.04.89 Patentblatt 89/16**

(45) Bekanntmachung des Hinweises auf die
Patenterteilung:
**03.10.90 Patentblatt 90/40**

(84) Benannte Vertragsstaaten:
**AT DE FR SE**

(56) Entgegenhaltungen:
**EP-A-0 106 907**
**FR-A-2 304 453**
**FR-A-2 528 348**
**GB-A-2 124 144**
**US-A-3 036 605**
**US-A-4 541 722**

(73) Patentinhaber: **Gebrüder Linck, Maschinenfabrik**
**"Gatterlinck" GmbH & Co.KG**
**Appenweierer Strasse 46**
**D-7602 Oberkirch (DE)**

㊒ Der Erfinder haben auf ihre Nennung verzichtet

(74) Vertreter: **Katscher, Helmut, Dipl.-Ing.**
**Bismarckstrasse 29**
**D-6100 Darmstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Kappsäge zum Ablängen von Brettern mit einer Querfördereinrichtung für die Bretter und mit mehreren im gegenseitigen Abstand angeordneten, einzeln in die Bewegungsbahn der Querförderereinreinrichtung bewegbaren Kappsägeeinheiten, die an einem Sägeschlitten gelagert sind, der in Längsrichtung der auf der Querfördereinrichtung liegenden Bretter an einem Führungsträger verfahrbar und positionierbar ist.

Die an einer Sägemaschine anfallenden Bretter, worunter hier auch ähnliche lange Holzerzeugnisse, wie Bohlen und Planken verstanden werden sollen, müssen üblicherweise an beiden Enden auf eine vorgegebene Länge mittels Kappsägen abgelängt werden. Zahlreichen bekannten Vorrichtungen ist gemeinsam, daß die auf einer Querfördereinrichtung herangeförderten Bretter zunächst mit einem Ende gegen einen Anschlag oder dgl. ausgerichtet und dann an diesem Ende glattgeschnitten werden (DE-OS 34 02 497), während ein zweiter Sägeschnitt, der die zu erzielende Länge des Brettes bestimmt, am anderen Brettende ausgeführt wird.

Wenn für das Ablängen dieses zweiten Brettendes nur eine einzige Kappsägeeinheit zur Verfügung steht, muß diese in dem gesamten Bereich verfahrbar sein, in dem der auszuführende Sägeschnitt liegen könnte. Der hierfür erforderliche Bauaufwand ist beträchtlich, außerdem erfordert das Verfahren der Kappsägeeinheit über einen größeren Weg einen verhältnismäßig hohen Zeitaufwand, der eine rasche Taktfolge unmöglich macht.

Um diese Taktfolge zu verkürzen, d.h. um die Kappsägeeinheit jeweils sehr rasch an wechselnden Positionen mit dem zu schneidenden Brett in Eingriff bringen zu können, sind bei einer bekannten Kappsäge der eingangs genannten Gattung (DE-PS 26 10 912) mehrere Kappsägeeinheiten an einem gemeinsamen Sägeschlitten gelagert, dessen Verfahrweg dann nur noch angenähert so lang sein muß wie der gegenseitige Abstand benachbarter Kappsägeeinheiten, um Kappsägeschnitte wahlweise in dem gesamten, mit Kappsägeeinheiten versehenen Bereich ausführen zu können.

Dadurch wird zwar eine wesentliche Verringerung des Zeitaufwandes für das Positionieren der Kappsägeeinheit erreicht, die das Brett auf die jeweils vorgegebene Länge schneiden soll. Für das Kappen des Brettanfangs ist hierbei jedoch eine einzige, fest positionierte Kappsäge vorgesehen. Es ist deshalb auch in diesem Fall erforderlich, das Brett zunächst mit seinem einen Ende gegen einen Anschlag zu fahren, bevor dieses Ende von dieser einen Kappsägeeinheit abgesägt wird. Das Längspositionieren des Brettes macht eine gesonderte Längspositioniereinrichtung erforderlich und kostet Zeit.

Aufgabe der Erfindung ist es daher, eine Kappsäge der eingangs genannten Gattung so auszugestalten, daß sowohl der Bauaufwand als auch der Zeitaufwand zum Ablängen der Bretter wesentlich verringert wird und daß insbesondere die Notwendigkeit entfällt, eine Längsausrichtung der Bretter vor oder auf der Querfördereinrichtung vorzunehmen.

Diese Aufgabe wird erfindungsgemäß dadurch gelöst, daß die Kappsägeeinheiten in zwei Gruppen an zwei Sägeschlitten gelagert sind, die gesondert an dem gemeinsamen Führungsträger verfahrbar und positionierbar sind.

Die auf eine vorgegebene Länge abzulängenden Bretter können dabei in jeder beliebigen Längsausrichtung auf dem Querförderer herantransportiert werden. Wenn durch eine vorangehende Vermessung des Brettes festgestellt wurde, wo die beiden Kappsägeschnitte an beiden Brettenden auszuführen sind, werden die beiden Sägeschlitten unabhängig voneinander so positioniert, daß sich jeweils eine der daran gelagerten Kappsägeeinheiten an der für den Sägeschnitt richtigen Position befindet. Diese beiden ausgewählten Kappsägeeinheiten werden in die Bewegungsbahn des Brettes bewegt und schneiden das Brett genau auf die vorgegebene Länge.

Hierbei ist keine Längsverschiebung der Bretter auf der Querfördereinrichtung nötig, um die Bretter mit einem Ende in den Bereich einer dieses Ende ablängenden, gestellfest angeordneten Kappsäge zu bringen. Damit entfällt auch der hierfür notwendige Zeitaufwand.

Vorteilhafte Ausgestaltungen des Erfindungsgedankens sind Gegenstand von Unteransprüchen.

Die Erfindung wird nachfolgend an einem Ausführungsbeispiel näher erläutert, das in der Zeichnung dargestellt ist. Es zeigt:

Fig. 1: Eine Draufsicht auf eine Querfördereinrichtung für Bretter, an der eine Kappsäge zum Ablängen der Bretter angeordnet ist,

Fig. 2: einen Schnitt Längs der Linie II-II in Fig. 1,

Fig. 3: einen vergrößerten Schnitt längs der Linie III—III in Fig. 2 und

Fig. 4: Beispiele möglicher Kappschnitte an unterschiedlichen Brettern.

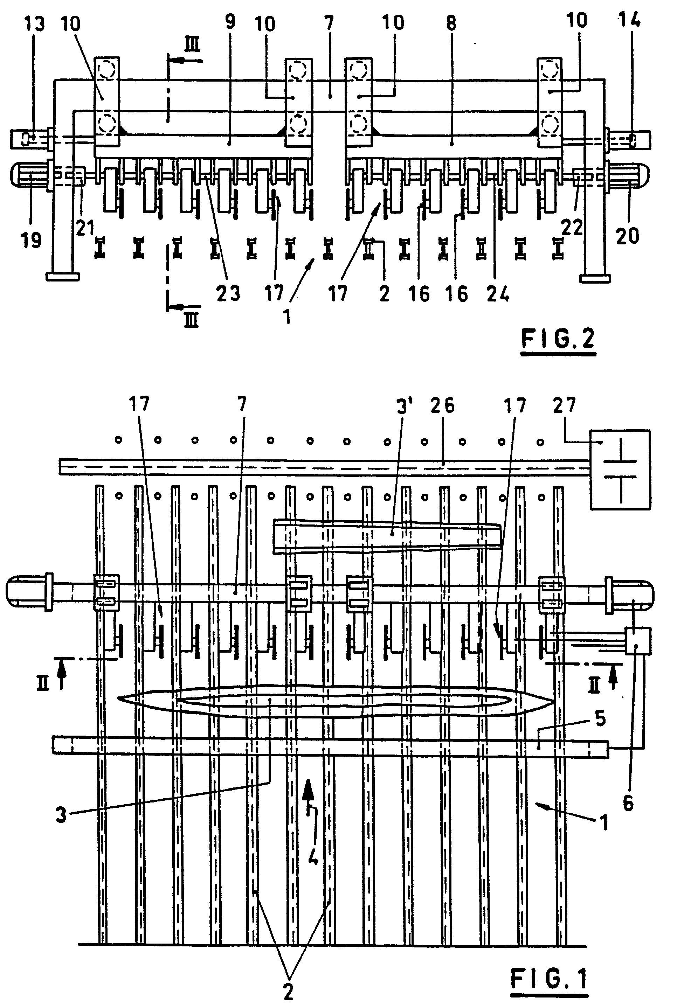

Die in den Figuren 1—3 gezeigte Querfördereinrichtung 1 besteht aus mehreren nebeneinanderliegenden, im Abstand und parallel zueinander verlaufenden Förderketten 2, auf denen die abzulängenden Bretter 3 in Richtung des Pfeiles 4 in Fig. 1 herangefördert werden. Die Bretter 3, die auch Bohlen, Planken oder ähnliche längliche Holzerzeugnisse sein können, erstrecken sich quer zur Förderrichtung der Querfördereinrichtung 1.

In dieser Lage passieren die Bretter 3 zunächst eine Vermessungsvorrichtung 5, die sich über die gesamte Breite der Querfördereinrichtung erstreckt und die die Längenabmessungen und Breitenabmessungen der Bretter 3 erfaßt. Aus den gewonnenen Meßsignalen wird in einer in Fig. 1 nur vereinfacht angedeuteten Steuereinrichtung 6 ermittelt, an welchen Stellen des Brettes die beiden oder mehreren Kappschnitte ausgeführt werden sollen. Bei diesem Rechenvorgang werden einerseits die ermittelten Abmessungen des jeweiligen Brettes 3, andererseits aber auch die Abmessungen der jeweils zu erzielenden Bretter berücksichtigt.

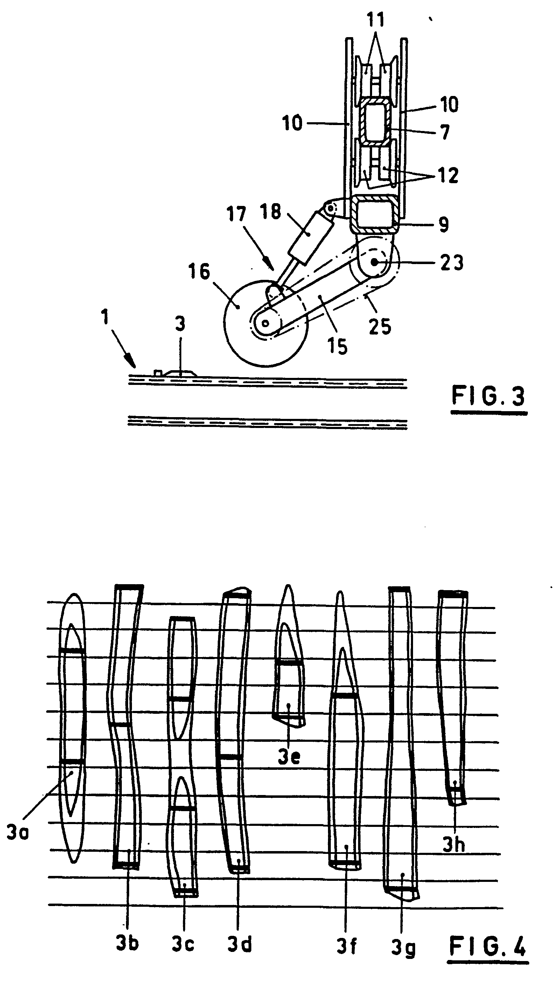

An einem gemeinsamen Führungsträger 7, der sich portalartig über die gesamte Breite der Querfördereinrichtung 1 erstreckt, sind zwei Sägeschlitten 8, 9 längsverfahrbar und positionierbar geführt. Die Sägeschlitten 8, 9 bestehen jeweils aus einem horizontalen Träger, die unter dem Führungsträger 7 angeordnet sind. Jeder Sägeschlitten 8 bzw. 9 hat an seinen beiden Enden zwei sich nach oben erstreckende Wangen 10, zwischen denen ein Paar von oberen Führungsrollen 11 und ein Paar von unteren Führungsrollen 12 gelagert sind (Fig. 3). Die Führungsrollen 11, 12 laufen an der Oberseite und der Unterseite des Führungsträgers 7 und führen somit den Sägeschlitten 8 bzw. 9 entlang dem gemeinsamen Führungsträger 7.

Beschriebenen Führungsrollen 11, 12 können auch andere Führungselemente verwendet werden, beispielsweise Linearkugellager oder Gleitlager- Führungsbüchsen, die an Rundführungen geführt sind.

Jeweils ein Positionierantrieb 13 bzw. 14, beispielsweise ein druckmittelbetätigter Zylinder, ist gestellfest an einem den Führungsträger 7 tragenden Ständer befestigt und greift an dem jeweils zugeordneten Sägeschlitten 8 bzw. 9 an, um diesen um einen vorgegebenen Betrag verfahren und positionieren zu können.

An der Unterseite der beiden Sägeschlitten 8, 9 sind jeweils an Schwenkarmen 15, die sich schräg nach unten erstrecken, Kreissägen 16 gelagert. Jede Kreissäge 16 bildet mit dem zugeordneten Schwenkarm 15 eine Kappsägeeinheit 17. Ein am Sägeschlitten 8 bzw. 9 und am Schwenkarm 15 angreifender Schwenkantrieb, beispielsweise ein druckmittelbetätigter Zylinder 18, dient dazu, die Kappsägeeinheit 17 nach unten zu schwenken, so daß die Kreissäge 16 in die Bewegungsbahn des Brettes 3 kommt, das auf der Querfördereirichtung 1 herangefördert wird. Die jeweils abgesenkten Kappsägeeinheiten 17 führen die Kappschnitte aus, während die übrigen Kappsägeeinheiten 17 unwirksam bleiben.

Der Antrieb aller Kappsägeeinheiten 17 eines Sägeschlittens 8 bzw. 9 erfolgt jeweils von einem gemeinsamen Motor 19 bzw. 20, der gestellfest ebenfalls an den Ständern des Führungsträgers 7 angebracht ist und über eine Schiebekupplung 21 bzw. 22, die Längsverschiebungen zuläßt, mit einer Antriebswelle 23 bzw. 24 verbunden ist. Die Antriebswellen 23 bzw. 24 bilden jeweils die gemeinsame Schwenkachse für alle Schwenkarme 15 des Sägeschlittens 8 bzw. 9. Ein Riementrieb 25 verbindet die Antriebswellen 23 bzw. 24 mit allen Kreissägen 16, so daß diese ständig angetrieben werden.

Die Schwenkantriebe 18 der einzelnen Kappsägeeinheiten 17 und die Postionierantriebe 13 und 14 werden von der Steuereinrichtung 6 gesteuert. Der mögliche Verfahrweg der Sägeschlitten 8 und 9 entspricht dabei angenähert dem gegenseitigen Abstand benachbarter Kreissägen 16, so daß die Kappsägeschnitte an jede beliebige Stelle gelegt werden können, wobei aber diejenigen schmalen Bereiche ausgespart werden können, an denen sich die Förderketten 2 befinden. Auf diese Weise kann sichergestellt werden, daß die Kreissägen 16 nicht mit den Förderketten 2 kollidieren.

Das abgelängte Brett 3' wird von der Querfördereinrichtung 2 auf einen Längsförderer 26 abgegeben, der es einer in Fig. 1 nur angedeuteten Besäumsäge 27 zuführt, mit der die Längsränder des Brettes 3' besäumt werden. Für die Breiteneinstellung der Besäumsäge 27 können ebenfalls die in der Vermessungsvorrichtung 5 ermittelten Werte benutzt werden.

Fig. 4 zeigt mehrere Bretter 3a—h, an denen Kappschnitte auf der Kappsäge nach den Figuren 1—3 ausgeführt werden. Beispielsweise können an einem Brett 3 längere Endabschnitte abgetrennt werden, wenn diese nicht die erforderliche Breite aufweisen. Die Bretter 3b, 3c und 3d sind als Beispiele ausgewählt, bei denen mehr als zwei Kappsägeschnitte ausgeführt werden, weil die Bretter eine zu starke Krümmung (3b, 3d) in einem bestimmten Bereich oder einen zu schmalen Mittelabschnitt aufweisen (3c). Das Brett 3f ist ein Beispiel dafür, daß einer der Kappschnitte nahe an einem Brettende ausgeführt wird, während der andere Kappschnitt ein verhältnismäßig langes Ende abtrennt. Ähnlich sind die Verhältnisse beim Brett 3e, wobei aber die nutzbare Länge wesentlich geringer ist. Die Bretter 3g und 3h werden nur nahe ihren beiden Enden gekappt, um gerade Brettenden zu erreichen.

Alle diese Kappschnitte können auf der beschriebenen Kappsäge ausgeführt werden, ohne daß eine Längsverschiebung der Bretter erforderlich ist.

## Patentansprüche

1. Kappsäge zum Ablängen von Brettern Enden mit einer Querfördereinrichtung für die Bretter und mit mehreren im gegenseitigen Abstand angeordneten, einzeln in die Bewegungsbahn der Querfördereinreinrichtung bewegbaren Kappsägeeinheiten, die an einem Sägeschlitten gelagert sind, der in Längsrichtung der auf der Querfördereinrichtung liegenden Bretter an einem Führungsträger verfahrbar und positionierbar ist, dadurch gekennzeichnet, daß die Kappsägeeinheiten (17) in zwei Gruppen an zwei Sägeschlitten (8, 9) gelagert sind, die gesondert an dem gemeinsamen Führungsträger (7) verfahrbar und positionierbar sind.

2. Kappsäge nach Anspruch 1, dadurch gekennzeichnet, daß die beiden Sägeschlitten (8, 9) jeweils als ein horizontaler Träger ausgebildet sind, der unter dem Führungsträger (7) angeordnet ist und an seinen beiden Enden Führungselemente aufweist.

3. Kappsäge nach Anspruch 1, dadurch gekennzeichnet, daß die Schwenkachsen der Schwenkarme (15) aller Kappsägeeinheiten (17) jeder Gruppe von einer gemeinsamen Antriebswelle (23 bzw. 24) gebildet werden, die über jeweils einen Riementrieb (25) mit jeder Kreissäge (16) jeder Kappsägeneinheit (17) in ständiger Antriebsverbindung steht.

4. Kappsäge nach Anspruch 3, dadurch gekennzeichnet, daß die Antriebswelle (23 bzw. 24) jedes Sägeschlittens (9, 8) jeweils mit einem gemeinsamen Motor (19 bzw. 20) verbunden ist.

5. Kappsäge nach Anspruch 3, dadurch gekennzeichnet, daß die Motoren (19, 20) der Antriebswellen (23, 24) der beiden Sägeschlitten (9, 8) gestellfest angeordnet und mit der jeweils zugehörigen Antriebswelle (23 bzw. 24) über eine Schiebekupplung (21 bzw. 22) verbunden sind.

6. Kappsäge nach Anspruch 1, dadurch gekennzeichnet, daß über der Querfördereinrichtung (1) vor den Kappsägeeinheiten (17) eine die gesamte Breite der Querfördereinrichtung (1) erfassende Vermessungsvorrichtung (5) für die Bretter (3) angeordnet ist.

**Revendications**

1. Scie circulaire verticale oscillante pour couper des planches à longueur, comprenant un dispositif transversal d'amenage des planches et plusieurs unités de scie circulaire verticale oscillante qui sont disposées à distance mutuelle, qui peuvent être amenées individuellement dans la voie de déplacement du dispositif transversal d'amenage et qui sont montées sur un chariot de scie pouvant être déplacé et mis en position sur un support de guidage dans la direction longitudinale des planches se trouvant sur le dispositif transversal d'amenage, caractérisée en ce que les unités de scie circulaire verticale oscillante (17) sont montées en deux groupes sur deux chariots de scies (8, 9) qui peuvent être déplacés et mis en position indépendamment sur le support de guidage (7) commun.

2. Scie circulaire verticale oscillante suivant la revendication 1, caractérisée en ce que les deux chariots de scie (8, 9) sont constitués chacun sous la forme d'un support horizontal qui est disposé sous le support de guidage (7) et qui comporte des éléments de guidage à ses deux extrémités.

3. Scie circulaire verticale oscillante suivant la revendication 1, caractérisée en ce que les axes de rotation des bras (15) de toutes les unités de scie circulaire verticale oscillante (17) de chaque groupe sont formés par un arbre d'entraînement (23 et 24) commun qui est en relation d'entraînement permanente, par respectivement une transmission à courroie (25), avec chaque scie circulaire (16) de chaque unité de scie circulaire verticale oscillante (17).

4. Scie circulaire verticale oscillante suivant la revendication. 3, caractérisée en ce que l'arbre d'entraînement (23 et 24) de chaque chariot de scie (9, 8) est relié à un moteur (19 et 20) commun.

5. Scie circulaire verticale oscillante suivant la revendication 3, caractérisée en ce que les moteurs (19, 20) des arbres d'entraînement (23, 24) des deux chariots de scie (9, 8) sont disposés de manière fixe sur le bâti et sont reliés à l'arbre d'entraînement (23 et 24) correspondant par un accouplement coulissant.

6. Scie circulaire verticale oscillante suivant la revendication 1, caractérisée en ce qu'au-dessus du dispositif transversal d'amenage (1) et devant les unités de scie circulaire verticale oscillante (17) est disposé un dispositif de mesure (5) des planches (3) détectant toute la largeur du dispositif transversal d'amenage (1).

**Claims**

1. Circular cross-cut saw for cutting boards to length, having a cross-travel device for the boards and having several movable circular cross-cut saw units arranged at mutual intervals individually in the movement path of the cross-travel device, which are supported on a saw carriage which can be traversed and positioned on a guide beam in the lengthwise direction of the boards lying on the cross-travel device, characterised in that the circular cross-cut saw units (17) are supported in two groups on two saw carriages (8, 9) which can be separately traversed and positioned on the common guide beam (7).

2. Circular cross-cut saw according to Claim 1, characterised in that the two saw carriages (8, 9) are in each case constructed as a horizontal beam which is arranged beneath the guide beam (7) and has guide members at its two ends.

3. Circular cross-cut saw according to Claim 1, characterised in that the swivelling axes of the swivel arms (15) of all circular cross-cut saw units (17) of each group are formed by a common drive shaft (23 or 24) which in each case are in permanent drive connection with each circular saw (16) of each circular cross-cut saw unit (17).

4. Circular cross-cut saw according to Claim 3, characterised in that the drive shaft (23 or 24) of each saw carriage (9, 8) is in each case connected to a common motor (19 or 20).

5. Circular cross-cut saw according to Claim 3, characterised in that the motors (19, 20) of the drive shafts (23, 24) of the two saw carriages (9, 8) are arranged solidly with the frame and are connected to the appropriate drive shaft in each case (23 or 24) through a sliding coupling (21 or 22).

6. Circular cross-cut saw according to Claim 1, characterised in that a measuring device (5) for the boards (3) is arranged covering the whole width of the cross-travel device (1) above the cross-travel device (1) in front of the circular cross-cut saw units (17).

EP 0 311 639 B1

FIG.2

FIG.1

FIG. 3

FIG. 4